# EUROPÄISCHE PATENTSCHRIFT

(11) **EP 1 417 423 B1**
(45) Veröffentlichungstag und Bekanntmachung des Hinweises auf die Patenterteilung: **09.03.2005**
(21) Anmeldenummer: 02758440.8
(22) Anmeldetag: 07.08.2002
(51) Int. Cl.: F16D 66/00

(54) **SCHEIBENBREMSE MIT EINRICHTUNG ZUR KRAFTMESSUNG**
DISC BRAKE COMPRISING A FORCE-MEASUREMENT DEVICE
FREIN A DISQUE EQUIPE D'UN DISPOSITIF DE MESURE DE FORCE

(30) Priorität: 16.08.2001 DE 10140021
(43) Veröffentlichungstag der Anmeldung: 12.05.2004
(73) Patentinhaber: Lucas Automotive GmbH, 56070 Koblenz (DE)
(72) Erfinder: MOHR, Kurt, 56283 Halsenbach-Ehr (DE)
(74) Vertreter: Röthinger, Rainer, Dipl.-Phys.
(86) Internationale Anmeldenummer: PCT/EP2002/008843
(87) Internationale Veröffentlichungsnummer: WO 2003/016746

(56) Entgegenhaltungen:
- US-A- 3 689 121
- US-A- 4 615 419
- US-A- 4 679 668
- US-A- 4 716 994
- US-A- 5 279 394
- PATENT ABSTRACTS OF JAPAN vol. 011, no. 135 (M-585), 28. April 1987 (1987-04-28) -& JP 61 275049 A (AKEBONO BRAKE RES & DEV CENTER), 5. Dezember 1986 (1986-12-05)
- PATENT ABSTRACTS OF JAPAN vol. 1998, no. 05, 30. April 1998 (1998-04-30) -& JP 10 016761 A (NIPPON SOKEN), 20. Januar 1998 (1998-01-20)

## Beschreibung

Die Erfindung betrifft eine Scheibenbremse mit einer Bremsscheibe und zwei beidseits der Bremsscheibe anpressbaren Bremsbacken, die in Bezug auf eine bei Anlage der Bremsbacken an die Bremsscheibe erzeugte Umfangskraft an einem fahrzeugfesten Träger abgestützt sind, und mit wenigstens einer, in einer Kraftübertragungskette zwischen mindestens einer der Bremsbacken und dem Träger angeordneten Einrichtung zum Messen und/oder Wandeln der Umfangskraft. Eine solche Scheibenbremse ist aus der DE-GM 90 10 026 bekannt.

Moderne Bremsanlagen erfordern für Steuer- und Regelzwecke eine exakte Erfassung der bei einem Bremsvorgang auftretenden Kräfte. Üblicherweise werden diese Kräfte in Querkräfte (auch Normalkräfte oder Klemmkräfte genannt) und Umfangskräfte (auch Reibkräfte genannt) unterteilt. Als Querkraft wird diejenige Kraftkomponente bezeichnet, welche von einer Bremsbacke senkrecht zur Ebene der Bremsscheibe in die Bremsscheibe eingeleitet wird. Unter der Umfangskraft hingegen versteht man diejenige Kraftkomponente, welche aufgrund der Bremsreibung zwischen einem Reibbelag der Bremsbacke und der Bremsscheibe in Umfangsrichtung der Bremsscheibe auf die Bremsbacke wirkt. Durch Multiplikation der Umfangskraft mit dem Abstand des Angriffspunkts der Umfangskraft von der Drehachse der Räder lässt sich das Bremsmoment ermitteln.

Viele Anwendungen erfordern eine genaue Kenntnis der tatsächlichen Größe des Bremsmoments und damit auch eine genaue Kenntnis der Umfangskraft. So kann das Bremsmoment beispielsweise zur Bildung eines präzisen Regelkreises bei elektrohydraulischen und elektromotorischen Bremsanlagen herangezogen werden.

Bei der aus der DE-GM 90 10 026 bekannten Scheibenbremse erfolgt die Messung der Umfangskraft mittels eines Kraftsensors, welcher an oder in einem Führungsstift angeordnet ist. Dieser Führungsstift ist mit dem eingangs erwähnten, fahrzeugfesten Träger fest verbunden und greift in eine Gleitnut ein. Die Gleitnut ist an einem starr mit einem der Bremsbacken verbundenen Bauteil ausgebildet und in Bezug auf den Führungsstift verschiebbar.

Eine weitere Scheibenbremse mit einem in einer Kraftübertragungskette zwischen mindestens einer der Bremsbacken und einem fahrzeugfesten Träger angeordneten Kraftsensor zur Messung der Umfangskraft ist aus der DE 196 39 686 bekannt. Der Kraftsensor ist an einer Befestigungsschraube angeordnet, mittels der ein Bremssattel der Scheibenbremse mit dem fahrzeugfesten Träger verbunden ist.

Auch aus der US 4,716,994 ist eine gattungsgemäße Scheibenbremse bekannt. Diese Scheibenbremse umfasst zusätzlich zu einem Kraftsensor ein mit dem Kraftsensor zusammenwirkendes Kraftübertragungsglied.

Es hat sich herausgestellt, dass die Umfangskraftmessung bei den aus dem Stand der Technik bekannten Scheibenbremsen aufgrund verschiedener Einflüsse mit Fehlern behaftet ist. Diese Fehler erschweren eine präzise Steuerung oder Regelung von Bremsanlagen.

Der Erfindung liegt die Aufgabe zugrunde, eine Scheibenbremse anzugeben, welche eine exaktere Ermittlung der bei einem Bremsvorgang auftretenden Umfangskräfte gestattet.

Diese Aufgabe wird erfindungsgemäß gelöst durch eine Scheibenbremse mit dem Merkmal des Anspruchs 1.

Die erfindungsgemäße Anordnung des Kraftübertragungsglieds gewährleistet, dass eine Querkraft, welche von einer Bremsbacke in das Kraftübertragungsglied eingeleitet wird, nicht die Einrichtung zum Messen und/oder Wandeln der Umfangskraft, sondern eine für das Kraftübertragungsglieds vorgesehene Führung beaufschlagt. Die Einrichtung zum Messen und/oder Wandeln der Umfangskraft wird folglich mit der reinen Umfangskraft beaufschlagt und kann diese präzise messen und/oder wandeln. Die Querkraft hingegen wird mittels des Kraftübertragungsglieds "ausgefiltert" und beeinflusst die Umfangskraftmessung und/oder -wandlung nicht.

Wie bereits erläutert, wird die von einer Bremsbacke in das Kraftübertragungsglied eingeleitet Querkraft vorteilhafterweise von einer für das Kraftübertragungsglied vorgesehenen Führung aufgenommen. Die Führung kann als Nut, Schiene, Lager für einen mit dem Kraftübertragungsglied gekoppelten Bolzen usw. ausgestaltet sein. Zweckmäßigerweise ist die Führung des Kraftübertragungsglieds starr mit dem fahrzeugfesten Träger gekoppelt. Damit wird bewirkt, dass die in die Führung eingeleitete Querkraft von dem Träger aufgenommen werden kann.

Das Kraftübertragungsglied kann parallel zur Bremsscheibe auf unterschiedlichen Bahnen geführt sein. So ist es denkbar, das Kraftübertragungsglied translatorisch, beispielsweise entlang einer Geraden, oder rotatorisch, etwa auf einer Kreisbahn, zu führen. Eine rotatorische Führung des Kraftübertragungsglieds ist bevorzugt. In diesem Fall kann beispielsweise daran gedacht werden, das Kraftübertragungsglied als Schwenkelement nach Art einer Wippe auszugestalten. Das Schwenkelement besitzt vorzugsweise eine zu einer Drehachse der Bremsscheibe parallele Schwenkachse und kann am Träger angelenkt sein. Soll das Kraftübertragungsglied hingegen translatorisch geführt werden, kann es z.B. in Form eines Gleitelements vorgesehen werden.

Ein parallel zur Bremsscheibe geführt bewegliches Kraftübertragungsglied kann auf einer einzigen Seite oder auf gegenüberliegenden Seiten der Bremsscheibe angeordnet sein. Im letzteren Fall sind insgesamt zwei Kraftübertragungsglieder vorhanden, wobei jedes Kraftübertragungsglied mit je einer Bremsbacke zusammenwirkt.

Wenn zwei Kraftübertragungsglieder vorhanden sind, kann für jedes Kraftübertragungsglied eine separate Einrichtung zum Messen und/oder Wandeln der Umfangskraft vorhanden sein. Auf diese Weise kann die Umfangskraft für die bezüglich der Bremsscheibe fahrzeuginnere Bremsbacke und für die fahrzeugäußere Bremsbacke separat gemessen und/oder gewandelt werden.

Zwei auf gegenüberliegenden Seiten der Bremsscheibe angeordnete Kraftübertragungsglieder können miteinander gekoppelt sein. Diese Kopplung ist vorzugsweise derart ausgestaltet, dass die jeweils von der fahrzeuginneren und fahrzeugäußeren Bremsbacke in die Kraftübertragungsglieder eingeleiteten Kräfte zusammengeführt, d.h. addiert werden. In diesem Fall reicht es aus, für die gekoppelten Kraftübertragungsglieder eine gemeinsame Einrichtung zum Messen und/oder Wandeln der Umfangskraft vorzusehen.

Die Kopplung der auf gegenüberliegenden Seiten der Bremsscheibe angeordneten Kraftübertragungsglieder ist vorzugsweise starr ausgestaltet, etwa nach Art einer Brücke. Eine derartige starre Kopplung hat den Vorteil, dass die Bremsbacken relativ zueinander stabilisiert werden, und reduziert den Schrägverschleiß der Reibbeläge deutlich.

Die Einrichtung zum Messen und/oder Wandeln der Umfangskraft kann beliebig angeordnet werden, solange gewährleistet ist, dass sie in der Kraftübertragungskette der Umfangskraft von mindestens einer der Bremsbacken zu dem fahrzeugfesten Träger hinter dem Kraftübertragungsglied angeordnet ist. Es kann daran gedacht werden, die Einrichtung in das Kraftübertragungsglied zu integrieren. Dies geschieht z.B. derart, dass das mit der Umfangskraft beaufschlagte Kraftübertragungsglied sich mittels der Einrichtung am fahrzeugfesten Träger abstützen kann. Am fahrzeugfesten Träger kann zu diesem Zweck ein Anschlag für das mit der Einrichtung zum Messen und/oder Wandeln der Umfangskraft bestückte Kraftübertragungsglied ausgebildet sein.

Die Einrichtung zum Messen und/oder Wandeln der Umfangskraft kann einen Kraftsensor umfassen. Der Kraftsensor ist beispielsweise als Piezoelement ausgestaltet. Ein derartiges Piezoelement kann auch aktiv angesteuert werden, um nach Art eines Aktuators eine Mitkopplung zu erzeugen, so dass während eines Bremsvorganges auftretende Führungsgeräusche kompensiert werden. Gemäß einer alternativen Ausgestaltung umfasst die Einrichtung zum Messen und/oder Wandeln der Umfangskraft einen Kraftwandler und einen Sensor zur Erfassung der gewandelten Kraft. Der Kraftwandler kann beispielsweise ein Kraft/Druckwandler sein, dem ein Drucksensor funktionell nachgeschaltet ist. Der nachgeschaltete Drucksensor kann über eine hydraulische Verbindung von der Bremse entfernt, z.B. am Achsschenkel oder Federbein, angeordnet werden, so dass er nicht der thermischen Belastung an der Bremse ausgesetzt ist.

Um die bei einem Bremsvorgang auftretenden Kräfte zuverlässig von der Bremsbacke in das Kraftübertragungsglied einzuleiten, kann zwischen der Bremsscheibe und dem Kraftübertragungsglied, zumindest während eines Bremsvorgangs, eine formschlüssig Verbindung ausgebildet sein. Zu diesem Zweck kann das Kraftübertragungsglied an einem mit der mindestens einen Bremsbacke zusammenwirkenden Bereich profiliert sein und die mindestens eine Bremsbacke eine komplementäre Profilierung aufweisen. Zweckmäßigerweise ist die Profilierung der Bremsbacke oder die Profilierung des Kraftübertragungsglieds nach Art einer parallel zur Drehachse der Bremsscheibe verlaufenden Nut ausgebildet, in welche eine komplementäre Profilierung des jeweils anderen Elements beweglich eingreift.

Die erfindungsgemäße Scheibenbremse kann in unterschiedlichsten Bremsanlagen zum Einsatz gelangen. Bevorzugt ist ein Verwendung der Scheibenbremse in elektrohydraulischen oder elektromotorischen Fahrzeugbremsanlagen. Bei derartigen Fahrzeugbremsanlagen wird die gemessene Umfangskraft zweckmäßigerweise zu Regelzwecken eingesetzt.

Weitere Einzelheiten und Vorteile der Erfindung ergeben sich aus der nachfolgenden Beschreibung bevorzugter Ausführungsbeispiele sowie aus den Figuren. Es zeigt:
- Fig. 1: eine Seitenansicht eines ersten Ausführungsbeispiels einer erfindungsgemäßen Scheibenbremse (gesehen in einer Richtung senkrecht zur Drehachse der Bremsscheibe);
- Fig. 2: eine weitere Seitenansicht der Scheibenbremse gemäß Fig. 1 (gesehen in Richtung der Drehachse der Bremsscheibe);
- Fig. 3: eine Detailansicht der Scheibenbremse gemäß Fig. 2;
- Fig. 4: einen bereichsweisen Schnitt entlang der Linie IV-IV von Fig. 3;
- Fig. 5: eine Detailansicht gemäß Fig. 3 eines zweiten Ausführungsbeispiels einer erfindungsgemäßen Scheibenbremse;
- Fig. 6: einen bereichsweisen Schnitt entlang der Linie VI-VI von Fig. 5;
- Fig. 7: eine Detailansicht gemäß Fig. 3 eines dritten Ausführungsbeispiels einer erfindungsgemäßen Scheibenbremse; und
- Fig. 8: einen bereichsweisen Schnitt entlang der Linie VIII-VIII von Fig. 7.

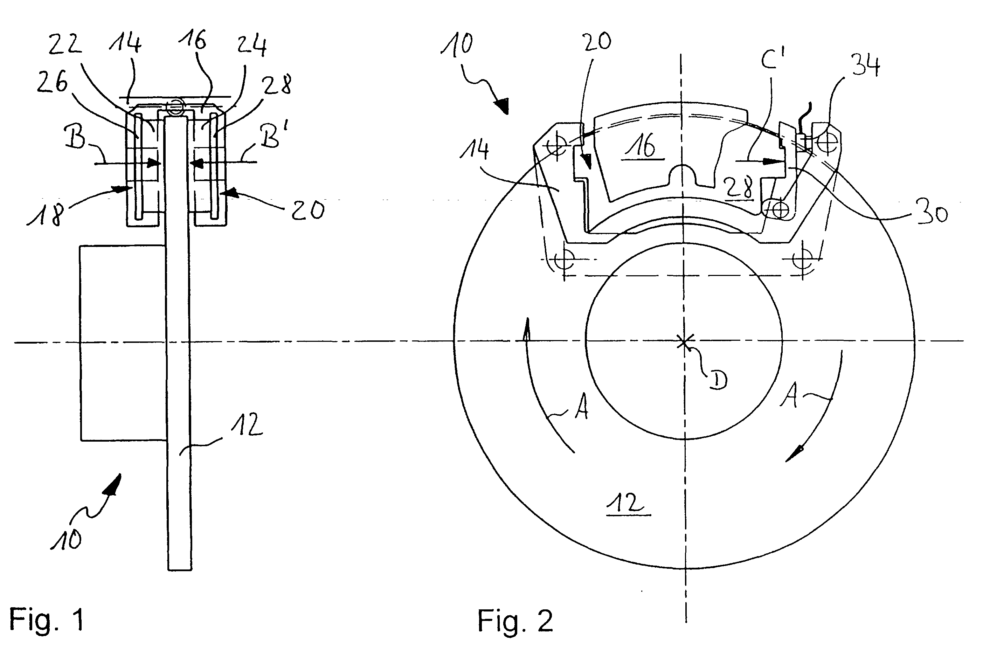

In den Fign. 1 bis 4 ist ein erstes Ausführungsbeispiel einer erfindungsgemäßen Scheibenbremse 10 einer Fahrzeugbremsanlage dargestellt. Die Scheibenbremse 10 besitzt eine Bremsscheibe 12, die sich bei Vorwärtsfahrt des Fahrzeuges in der Seitenansicht gemäß Fig. 2 in Richtung der Pfeile A bewegt. Die Scheibenbremse 10 ist in herkömmlicher Weise an einem Bremsträger 14 abgestützt, der fahrzeugfest montiert ist, d.h. sich im Bezug auf das Fahrzeug nicht bewegt. Ein Bremssattel 16 übergreift die Bremsscheibe 12.

Zwei Bremsbacken 18, 20 sind beidseits der Bremsscheibe 12 angeordnet und weisen jeweils einen Reibbelag 22, 24 auf, der zum Bremsen gegen die Bremsscheibe 12 andrückbar ist. In üblicher Weise sind die Reibbeläge 22, 24 jeweils auf Trägerplatten 26, 28 befestigt.

Bei einer Betätigung der Scheibenbremse 10 erfolgt ein Andrücken der Reibbeläge 22, 24 in Richtung der Pfeile B, B' gegen die Bremsscheibe 12. Die Pfeile B, B' versinnbildlichen daher die Klemm- oder Querkraft. Die Klemmkraft wird, wie aus dem Stand der Technik bekannt, mittels eines in den Figuren nicht dargestellten Betätigungsmechanismus erzeugt. Die Klemmwirkung zwischen den Reibbelägen 22, 24 der Klemmbacken 18, 20 und der Bremsscheibe 12 erzeugt eine Reibungskraft (Umfangskraft), welche in Fig. 2 für die Bremsbacke 20 durch den Pfeil C' gekennzeichnet ist. Mit einer entsprechenden Umfangskraft wird auch die in Fig. 2 nicht dargestellte Bremsbacke 18 beaufschlagt.

Wie sich aus den Fign. 1 bis 4 ergibt, werden die im Rahmen eines Bremsvorgangs erzeugten Kräfte in Richtung des Pfeils C' und teilweise auch in Richtung der Pfeile B, B' in Kraftübertragungsglieder 30, 32 eingeleitet, welche sich mittels je einer Einrichtung 34, 36 zum Messen und/oder Wandeln der Umfangskraft am fahrzeugfesten Träger 14 abstützen. Der fahrzeugfeste Träger 14 wiederum ist mittels geeigneter Befestigungsbolzen 40 starr mit dem Fahrzeug verbunden.

Jedes der beiden Kraftübertragungsglieder ist als ein Schwenkelement 30, 32 nach Art einer Wippe ausgebildet. Die Schwenkelemente 30, 32 sind mittels je eines Befestigungsbolzens 44, 46 am Träger 14 schwenkbar angelenkt. Die von den Bolzen 44, 46 definierten Schwenkachsen der Schwenkelement 30, 32 verlaufen parallel zur Drehachse D (Fig. 2) der Bremsscheibe 12. Die Bolzen 44, 46 gestatten daher eine geführte Rotationsbewegung der Schwenkelemente 30, 32 parallel zur Bremsscheibe 12, d.h. parallel zu einer die Bremsscheibe 12 enthaltenden Ebene.

Die vorstehend erläuterte Lagerung der Schwenkelemente 30, 32 hat zur Folge, dass die die Schwenkelemente 30, 32 in Richtung der Pfeile B, B' (Fig. 1) beaufschlagende Querkraftkomponente von den Schwenkelementen 30, 32 über die Bolzen 44, 46 in den Träger 14 eingeleitet wird. Im Gegensatz dazu wird die in Richtung des Pfeils C' (Fig. 2) in die Schwenkelemente 30, 32 eingeleitete Umfangskraftkomponente unmittelbar in die sich am Träger 14 abstützenden Einrichtungen 34, 36 zum Messen und/oder Wandeln der Umfangskraft übertragen. Mit anderen Worten, die querkraftaufnehmenden Lagerung der Schwenkelemente 30, 32 gewährleistet, dass die in die Schwenkelemente 30, 32 eingeleiteten Kräfte querkraftbereinigt die Einrichtungen 34, 36 zum Messen der Umfangskraft beaufschlagen.

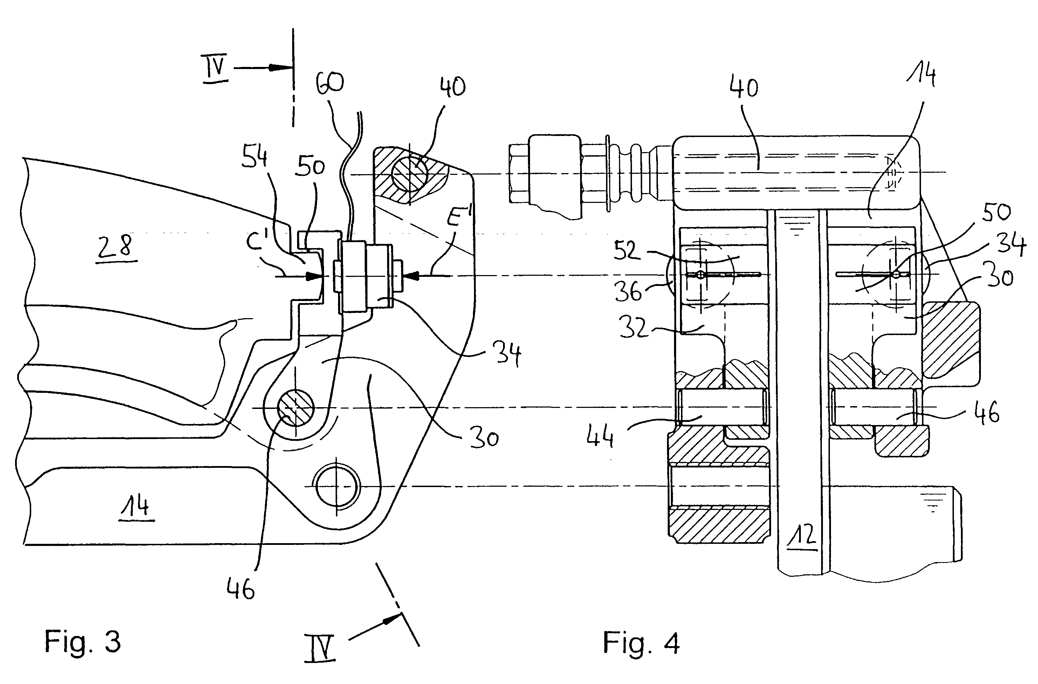

Die Trägerplatten 26, 28 wirken mit den Schwenkelementen 30, 32 in formschlüssiger Weise zusammen. Zu diesem Zweck ist in jedem Schwenkelement 30, 32 eine parallel zur Drehachse D der Bremsscheibe 12 verlaufende nutförmige Vertiefung 50. 52 ausgebildet, in welcher jeweils ein zapfenartiger Vorsprung der Trägerplatten 26, 28 eingreift. In Fig. 3 ist dies beispielhaft für das Eingreifen des zapfenartigen Vorsprungs 54 der Trägerplatte 28 in die Nut 50 des Schwenkarms 30 dargestellt.

Bei den in den Fign. 2 bis 4 dargestellten Einrichtungen zum Messen und/oder Wandeln der Umfangskraft handelt es sich um piezokeramische Kraftsensoren 34, 36, in welche mittels der Schwenkelemente 30, 32 die Umfangskraft eingeleitet wird und welche diese in ein elektrisches Signal wandeln.

Das von den Kraftsensoren 34, 36 erzeugte, elektrische Signal kann mittels elektrische Leitungen einer in den Figuren nicht dargestellten Steuer- oder Regelelektronik zugeführt werden. In Fig. 3 ist beispielhaft die elektrische Leitung 60 des Kraftsensors 34 abgebildet. Die Kraftsensoren 34, 36 sind beim vorliegenden Ausführungsbeispiel in den Träger 14 integriert. Es könnte jedoch auch daran gedacht werden, die Kraftsensoren 34, 36 in die Schwenkelemente 30, 32 zu integrieren. Auch wäre es grundsätzlich denkbar, zusätzliche Elemente kraftübertragend zwischen den Kraftübertragungsgliedern in Gestalt der Schwenkelemente 30, 32 und den Einrichtungen zum Messen und/oder Wandeln der Umfangskraft in Form der Kraftsensoren 34, 36 oder zwischen diesen Einrichtungen und dem Träger 14 anzuordnen.

Bei dem unter Bezugnahme auf die Fign. 1 bis 4 erläuterten, ersten Ausführungsbeispiel einer erfindungsgemäßen Scheibenbremse sind die Kraftübertragungsglieder und die Einrichtungen zum Messen und/oder Wandeln der Umfangskraft derart angeordnet, dass die zum Abbremsen einer Vorwärtsbewegung des Fahrzeugs auftretenden Kräfte gemessen werden können. Es ist jedoch auch möglich, zusätzlich zu den oder anstatt der beim Abbremsen einer Vorwärtsbewegung auftretenden Kräfte die beim Abbremsen einer Rückwärtsbewegung auftretenden Kräfte zu messen und/oder zu wandeln. So könnte zusätzlich zu der in Fig. 2 auf der rechten Seite der Trägerplatte 28 angeordneten Einrichtung zum Messen und/oder Wandeln der Umfangskraft und zu dem Kraftübertragungsglied derartige Komponenten auch auf der gegenüberliegenden Seite der Trägerplatte 28 vorgesehen werden.

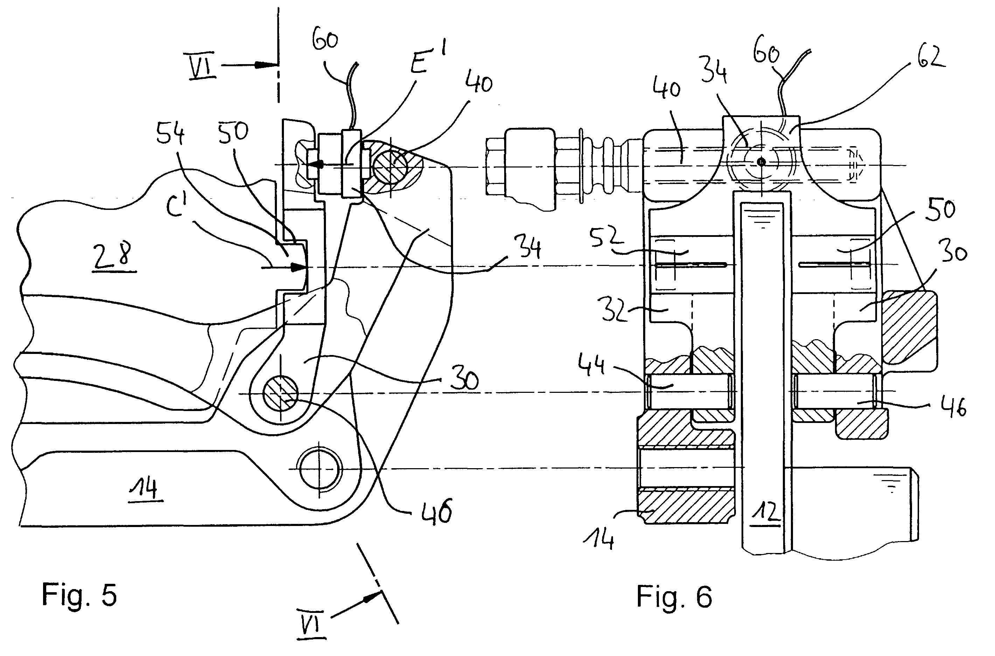

Bei der in den Fign. 1 bis 4 dargestellten Scheibenbremse 10 gemäß dem ersten Ausführungsbeispiel sind die beiden Schwenkelemente 30, 32 nicht miteinander gekoppelt. Aus diesem Grund erfassen die beiden Kraftsensoren 34, 36 die Umfangskraft für die fahrzeuginnere Bremsbacke 18 und die fahrzeugäußere Bremsbacke 20 (Fig. 1) getrennt. Gemäß dem in den Fign. 5 und 6 dargestellten zweiten Ausführungsbeispiel einer erfindungsgemäßen Scheibenbremse wird die Umfangskraft für die beiden Bremsbacken 18 und 20 mittels nur eines einzigen Kraftsensors 34 gemessen.

Die in den Fign. 5 und 6 ausschnittsweise dargestellte Scheibenbremse gemäß dem zweiten Ausführungsbeispiel stimmt im Wesentlichen mit der Scheibenbremse des ersten Ausführungsbeispiels überein. Abweichend vom ersten Ausführungsbeispiel sind bei der Scheibenbremse gemäß dem zweiten Ausführungsbeispiel aber die auf gegenüberliegenden Seiten der Bremsscheibe 12 angeordneten Schwenkelemente 30, 32 mittels eines zentralen Abschnitts 62 überbrückt und daher starr miteinander gekoppelt (Fig. 6). Der einzige Kraftsensor 34 ist im Bereich dieser zentralen, die beiden Schwenkelemente 30, 32 überbrückenden Abschnitts 62 angeordnet.

Der Kraftsensor 34 ist bezüglich seiner Position im ersten Ausführungsbeispiel (s. Fign. 3 und 4) in den Fign. 5 und 6 nach oben in Richtung auf den überbrückenden Abschnitt 62 versetzt worden. Dies hat zur Folge, dass der Angriffspunkt der durch den Pfeil C' gekennzeichneten Kraft am Schwenkarm 30 bezüglich des Angriffspunkts der durch den Pfeil E symbolisierten Gegenkraft nicht mehr auf ein und derselben horizontalen Geraden liegt (vgl. Fig. 3).

Die in den Fign. 5 und 6 dargestellte Überbrückung 62 der beiden Schwenkelemente 30, 32 bewirkt eine Addierung der auf die beiden Bremsbacken 18, 20 wirkenden Umfangskräfte. Die Überbrückung 62 der beiden Schwenkelemente 30, 32 bewirkt außerdem eine Stabilisierung der Bremsbacken 18, 20 relativ zueinander und eine damit einhergehende Reduzierung des Schrägverschleißes der Reibbeläge 22, 24.

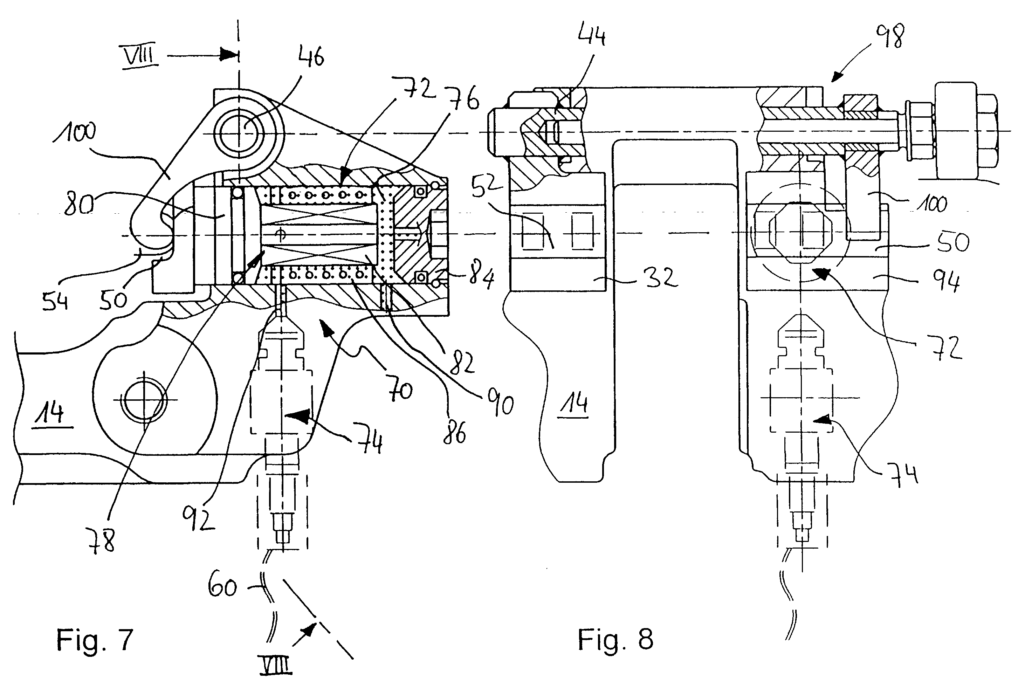

In den Fign. 7 und 8 ist ein drittes Ausführungsbeispiel einer erfindungsgemäßen Scheibenbremse ausschnittsweise dargestellt. Die Scheibenbremse gemäß dem dritten Ausführungsbeispiel ähnelt der Scheibenbremse des zweiten Ausführungsbeispiels. Erneut ist eine gemeinsame Einrichtung 70 zum Messen und/oder Wandeln der Umfangskraft vorhanden, so dass diese Einrichtung 70 die Summe der von der fahrzeuginneren und der fahrzeugäußeren Bremsbacke verursachten Umfangskraft ermittelt.

Die Einrichtung 70 zum Messen und/oder Wandeln der Umfangskraft besteht aus zwei Baugruppen, nämlich einem Kraft/Druck-Wandler 72 einerseits und einem Drucksensor 74 andererseits. Der Kraft/Druck-Wandler 72 umfasst eine im Träger 14 ausgebildete, zylindrische Bohrung 76, in welcher ein Kolben 78 mit einem Kolbenkopf 80 und einer Kolbenstange 82 verschiebbar geführt ist. Die zylindrische Bohrung 76 ist rückseitig, d.h. auf ihrer dem Kolbenkopf 80 abgewandten Seite, von einem Einsatz 84 verschlossen. Innerhalb der zylindrischen Bohrung 76 ist eine für ein fluides Medium durchlässige, hohlzylindrische Führung 86 für die Kolbenstange 82 ausgebildet und ein fluides Medium, beispielsweise ÖI, angeordnet. Die zylindrische Bohrung 76 ist mit zwei den Träger 14 durchsetzenden Fluidleitungen 90, 92 verbunden. Die erste Fluidleitung 90 verbindet die zylindrische Bohrung 76 mit einem Versorgungssystem für das Fluid und die zweite Fluidleitung 92 mit dem Drucksensor 74. Die Funktion der Einrichtung 70 zum Messen und/oder Wandeln der Umfangskraft wird weiter unten ausführlicher erläutert.

Die Scheibenbremse gemäß dem dritten Ausführungsbeispiel umfasst zwei parallel zur Bremsscheibe geführt bewegliche Kraftübertragungsglieder, nämlich einerseits ein am Träger 14 angelenktes Schwenkelement 32 und andererseits ein plattenförmiges Kraftübertragungsglied 94, welches mit dem Kolbenkopf 80 gekoppelt ist. Diese Kopplung des plattenförmigen Kraftübertragungsglieds 94 mit dem Kolben 78 gewährleistet eine geführte Bewegung des plattenförmigen Kraftübertragungsglieds 94 parallel zur Bremsscheibe aufgrund des Zusammenwirkens der Kolbenstange 82 mit der für die Kolbenstange 82 vorgesehenen Führung 86 und des Kolbenkopfes 80 mit der Innenwand der zylindrischen Bohrung 76. Aufgrund dieser translatorischen Führung des plattenförmigen Kraftübertragungsglieds 94 wird eine in das Kraftübertragungsglied 94 eingeleitete Querkraft mittels des Kolbens 78 auf den fahrzeugfesten Träger 14 übertragen. Die in das plattenförmige Kraftübertragungsglied 94 eingeleitete Umfangskraft hingegen bewirkt eine Verschiebung des Kolbens 78 in Fig. 7 nach rechts. Aufgrund dieser Verschiebung des Kolbens 78 wird das im Bereich der zylinderförmigen Bohrung 76 angeordnete fluide Medium komprimiert, und der Druck innerhalb der zylindrischen Bohrung 76 steigt an. Diese der Umfangskraft proportionale Druckerhöhung wird von dem Drucksensor 74 erfasst und mittels elektrischer Leitungen 60 als elektrisches Signal einer in den Figuren nicht dargestellten Steuer- oder Regelelektronik zugeführt.

In das plattenförmige Kraftübertragungsglied 94 werden nicht nur Kräfte von der diesem Kraftübertragungsglied 94 zugeordneten Bremsbacke, sondern auch von einer dieser ersten Bremsbacke bezüglich der Bremsscheibe gegenüberliegenden, zweiten Bremsbacke eingeleitet, und zwar mittels einer Kraftübertragungsanordnung 98. Die Kraftübertragungsanordnung 98 umfasst ein der zweiten Bremsbacke zugeordnetes Kraftübertragungsglied in Gestalt eines Schwenkelements 32, einen den Träger 14 parallel zur Drehachse der Bremsscheibe durchsetzenden Lagerbolzen 44 sowie einen mit dem plattenförmigen Kraftübertragungsglied 94 zusammenwirkenden Arm 100. Sowohl das Schwenkelement 32 als auch der Arm 100 sind mittels Laserschweißens mit dem Bolzen 44 verbunden und in einem rechten Winkel bezüglich diesem angeordnet.

Eine auf das Schwenkelement 32 einwirkende Querkraft wird über den starr mit dem Schwenkelement 32 gekoppelten Bolzen 44 in den Träger 14 eingeleitet. Eine in das Schwenkelement 32 eingeleitete Umfangskraft hingegen wird mittels des Bolzens 44 auf den Arm 100 und von diesem auf das plattenförmige Kraftübertragungsglied 94 übertragen. Die Kraftübertragungsanordnung 98 gestattet daher eine Kopplung von Schwenkelement 32 und plattenförmigem Kraftübertragungsglied 94.

## Patentansprüche

1. Scheibenbremse (10) mit einem Bremssattel (16), zwei beidseits an eine Bremsscheibe (12) anpressbaren Bremsbacken (18, 20), die in Bezug auf eine bei Anlage der Bremsbacken (18, 20) an die Bremsscheibe (12) erzeugte Umfangskraft (C) an einem fahrzeugfesten Träger (14) abgestützt sind, wobei die Umfangskraft (C') in Abhängigkeit von einer Drehrichtung (A) der Bremsscheibe (12) in einer von zwei entgegengesetzten Umfangskraftrichtungen wirkt, mit wenigstens einer, in einer Kraftübertragungskette zwischen mindestens einer der Bremsbacken (18, 20) und dem Träger (14) angeordneten Einrichtung (34, 70) zum Messen und/oder Wandeln der Umfangskraft (C') und mit mindestens einem Kraftübertragungsglied (30; 32; 78, 80, 94), das zwischen mindestens einer der Bremsbacken (18, 20) und der Einrichtung (34, 70) zum Messen und/oder Wandeln der Umfangskraft (C') angeordnet und in einer zur Bremsscheibe (12) parallelen Ebene geführt beweglich ist,
**dadurch gekennzeichnet, dass** das mindestens eine Kraftübertragungsglied (30; 32; 78, 80, 94) einseitig bezüglich des Bremssattels (16) angeordnet ist, um die erzeugte Umfangskraft in lediglich einer der beiden Umfangskraftrichtungen aufzunehmen und zu übertragen.

2. Scheibenbremse nach Anspruch 1,
**dadurch gekennzeichnet, dass** eine Führung für das Kraftübertragungsglied (30, 32, 94) starr mit dem Träger (14) gekoppelt ist

3. Scheibenbremse nach Anspruch 1 oder 2,
**dadurch gekennzeichnet, dass** das Kraftübertragungsglied (94) translatorisch geführt ist.

4. Scheibenbremse nach Anspruch 1 oder 2,
**dadurch gekennzeichnet, dass** das Kraftübertragungsglied (30, 32) rotatorisch geführt ist.

5. Scheibenbremse nach Anspruch 4,
**dadurch gekennzeichnet, dass** das Kraftübertragungsglied ein Schwenkelement (30, 32) ist, welches eine zu einer Drehachse (D) der Bremsscheibe (12) parallele Schwenkachse besitzt.

6. Scheibenbremse nach Anspruch 5,
**dadurch gekennzeichnet, dass** das Schwenkelement (30, 32) am Träger (14) angelenkt ist.

7. Scheibenbremse nach einem der Ansprüche 1 bis 6,
**dadurch gekennzeichnet, dass** auf gegenüberliegenden Seiten der Bremsscheibe (12) je ein Kraftübertragungsglied (30, 32, 94) angeordnet ist.

8. Scheibenbremse nach Anspruch 7,
**dadurch gekennzeichnet, dass** für jedes Kraftübertragungsglied (30, 32) eine separate Einrichtung (34, 36) zum Messen und/oder Wandeln der Umfangskraft (C') vorhanden ist.

9. Scheibenbremse nach einem der Ansprüche 7 oder 8,
**dadurch gekennzeichnet, dass** die auf gegenüberliegenden Seiten der Bremsscheibe (12) angeordneten Kraftübertragungsglieder (30, 32, 94) miteinander gekoppelt sind.

10. Scheibenbremse nach Anspruch 9,
**dadurch gekennzeichnet, dass** für die gekoppelten Kraftübertragungsglieder (30, 32, 94) eine gemeinsame Einrichtung (34, 70) zum Messen und/oder Wandeln der Umfangskraft (C') vorhanden ist.

11. Scheibenbremse nach einem der Ansprüche 1 bis 10,
**dadurch gekennzeichnet, dass** die Einrichtung zum Messen und/oder Wandeln der Umfangskraft (C') in das Kraftübertragungsglied integriert ist.

12. Scheibenbremse nach einem der Ansprüche 1 bis 11,
**dadurch gekennzeichnet, dass** die Einrichtung zum Messen und/oder Wandeln der Umfangskraft (C') einen Kraftsensor (34, 36) umfasst.

13. Scheibenbremse nach einem der Ansprüche 1 bis 10,
**dadurch gekennzeichnet, dass** die Einrichtung (70) zum Messen und/oder Wandeln der Umfangskraft (C') einen Kraft/Druck-Wandler (72) und einen Drucksensor (74) umfasst.

14. Scheibenbremse nach einem der Ansprüche 1 bis 13,
**dadurch gekennzeichnet, dass** das Kraftübertragungsglied (32, 34, 94) an einem mit der mindestens einen Bremsbacke (18, 20) zusammenwirkenden Bereich (50, 52) profiliert ist und die mindestens eine Bremsbacke (18, 20) eine komplementäre Profilierung (54) besitzt.

15. Elektrohydraulische oder elektromotorische Fahrzeugbremsanlage mit einer Scheibenbremse (10) nach einem der Ansprüche 1 bis 14.

## Claims

1. Disc brake (10) comprising a caliper (16), two brake shoes (18, 20), which are pressable against both sides of a brake disc (12) and which in relation to a peripheral force (C') generated upon application of the brake shoes (18, 20) against the brake disc (12) are supported against a vehicle-fixed carrier (14), wherein the peripheral force (C') in dependence upon a direction of rotation (A) of the brake disc (12) acts in one of two opposite peripheral force directions, comprising at least one device (34, 70) for measuring and/or converting the peripheral force (C'), which device is disposed in a force transmission chain between at least one of the brake shoes (18, 20) and the carrier (14), and comprising at least one force transmission member (30; 32; 78, 80, 94), which is disposed between at least one of the brake shoes (18, 20) and the device (34, 70) for measuring and/or converting the peripheral force (C') and is movable under guidance in a plane parallel to the brake disc (12),
**characterized in that** the at least one force transmission member (30; 32; 78, 80, 94) is disposed at one side relative to the calliper (16) in order to take up and transmit the generated peripheral force in only one of the two peripheral force directions.

2. Disc brake according to claim 1,
**characterized in that** a guide for the force transmission member (30, 32, 94) is rigidly coupled to the carrier (14).

3. Disc brake according to claim 1 or 2,
**characterized in that** the force transmission member (94) is guided in a translatory manner.

4. Disc brake according to claim 1 or 2,
**characterized in that** the force transmission member (30, 32) is guided in a rotary manner.

5. Disk brake according to claim 4,
**characterized in that** the force transmission member is a swivel element (30, 32) which has a swivelling axis parallel to an axis of rotation (D) of the brake disc (12).

6. Disc brake according to claim 5,
**characterized in that** the swivel element (30, 32) is coupled to the carrier (14).

7. Disc brake according to one of claims 1 to 6,
**characterized in that** one force transmission member (30, 32, 94) is disposed at each opposite side of the brake disc (12).

8. Disc brake according to claim 7,
**characterized in that** for each force transmission member (30, 32) a separate device (34, 36) for measuring and/or converting the peripheral force (C') is provided.

9. Disc brake according to one of claims 7 or 8,
**characterized in that** the force transmission members (30, 32, 94) disposed at opposite sides of the brake disc (12) are coupled to one another.

10. Disc brake according to claim 9,
**characterized in that** for the coupled force transmission members (30, 32, 94) a common device (34, 70) for measuring and/or converting the peripheral force (C') is provided.

11. Disc brake according to one of claims 1 to 10,
**characterized in that** the device for measuring and/or converting the peripheral force (C') is integrated into the force transmission member.

12. Disc brake according to one of claims 1 to 11,
**characterized in that** the device for measuring and/or converting the peripheral force (C') comprises a force sensor (32, 34).

13. Disc brake according to one of claims 1 to 10,
**characterized in that** the device (70) for measuring and/or converting the peripheral force (C') comprises a force/pressure transducer (72) and a pressure sensor (74).

14. Disc brake according to one of claims 1 to 13,
**characterized in that** the force transmission member (32, 34, 94) at a region (50, 52) interacting with the at least one brake shoe (18, 20) is profiled and the at least one brake shoe (18, 20) has a complementary profiling (54).

15. Electrohydraulic or electromotive vehicle brake system having a disc brake (10) according to one of claims 1 to 14.

## Revendications

1. Frein à disque (10) comprenant un étrier de frein (16), deux mâchoires de frein (18, 20) pouvant être pressées contre les deux faces du disque de frein (12) et s'appuyant sur un support (14) fixé au véhicule en raison d'une force circonférentielle (C') générée lors du contact des mâchoires de frein (18, 20) sur le disque de frein (12), laquelle force circonférentielle (C') agit en fonction d'un sens de rotation (A) du disque de frein (12) dans un des deux sens opposés de la force circonférentielle, et comprenant au moins un dispositif (34, 70) de mesure et/ou de conversion de la force circonférentielle (C') placé dans une chaîne de transmission de force entre au moins une des mâchoires de frein (18, 20 et le support (14), et au moins un élément de transmission de force (30 ; 32 ; 78, 80, 94) placé entre au moins une des mâchoires de frein (18, 20) et le dispositif (34, 70) de mesure et/ou de conversion de la force circonférentielle (C') et guidé mobile dans un plan parallèle par rapport au disque de frein (12),
**caractérisé en ce que** l'élément de transmission de force (30 ; 32 ; 78, 80, 94) est disposé d'un seul côté par rapport à l'étrier de frein (16) afin d'absorber et de transmettre dans seulement un des deux sens de la force circonférentielle la force circonférentielle générée.

2. Frein à disque selon la revendication 1,
**caractérisé en ce qu'**un système servant au guidage de l'élément de transmission de force (30, 32, 94) est accouplé de manière rigide au support (14).

3. Frein à disque selon la revendication 1 ou 2,
**caractérisé en ce que** l'élément de transmission de force (94) est guidé en translation.

4. Frein à disque selon la revendication 1 ou 2,
**caractérisé en ce que** l'élément de transmission de force (30, 32) est guidé en rotation.

5. Frein à disque selon la revendication 4,
**caractérisé en ce que** l'élément de transmission de force (30, 32) est un élément pivotant (30, 32), lequel possède un axe de pivotement parallèle par rapport à un axe de rotation (D) du disque de frein (12).

6. Frein à disque selon la revendication 5,
**caractérisé en ce que** l'élément pivotant (30, 32) est monté articulé sur le support (14).

7. Frein à disque selon l'une des revendications 1 à 6,
**caractérisé en ce qu'**un élément de transmission de force ( 30, 32, 94) est disposé de chaque côté du disque de frein (12).

8. Frein à disque selon la revendication 7,
**caractérisé en ce qu'**il est prévu pour chaque élément de transmission de force (30, 32) un dispositif (34, 26) distinct pour la mesure et/ou la conversion de la force circonférentielle (C').

9. Frein à disque selon l'une des revendications 7 ou 8,
**caractérisé en ce que** les éléments de transmission de force (30, 32, 94) disposés sur les côtés opposés du disque de frein (12) sont accouplés les uns aux autres.

10. Frein à disque selon la revendication 9,
**caractérisé en ce qu'**il est prévu pour les éléments de transmission de force (30, 32, 94) accouplés un dispositif (34, 70) commun pour la mesure et/ou la conversion de la force circonférentielle (C').

11. Frein à disque selon l'une des revendications 1 à 10,
**caractérisé en ce que** le dispositif de mesure et/ou de conversion de la force circonférentielle (C') est intégré dans l'élément de transmission de force.

12. Frein à disque selon l'une des revendications 1 à 11,
**caractérisé en ce que** le dispositif de mesure et/ou de conversion de la force circonférentielle (C') comprend un capteur de force (34, 36).

13. Frein à disque selon l'une des revendications 1 à 10,
**caractérisé en ce que** le dispositif (70) de mesure et/ou de conversion de la force circonférentielle (C') comprend un transducteur de force et de pression (72) et un capteur de pression (74).

14. Frein à disque selon l'une des revendications 1 à 13,
**caractérisé en ce que** l'élément de transmission de force (32, 34, 94) est profilé sur une partie (50, 52) coopérant avec la mâchoire de frein (18, 20) et que ladite mâchoire de frein (18, 20) présente un profil complémentaire (54).

15. Système de frein de véhicule électrohydraulique ou électromoteur équipé d'un frein à disque (10) selon l'une des revendications 1 à 14.
